# EUROPEAN PATENT APPLICATION

(11) **EP 3 985 534 A1**
(43) Date of publication of application: **20.04.2022**
(21) Application number: 21186383.2
(22) Date of filing: 19.07.2021
(51) Int. Cl.: G06F 21/54, G06F 21/52

(54) **INFORMATION PROCESSING PROGRAM, INFORMATION PROCESSING METHOD, AND INFORMATION PROCESSING DEVICE**

(30) Priority: 16.10.2020 JP 2020174645
(71) Applicant: FUJITSU LIMITED, Kanagawa 211-8588 (JP)
(72) Inventor: Shishido, Katsunari, Kawasaki-shi, Kanagawa, 211-8588 (JP)
(74) Representative: Hoffmann Eitle

(57) **Abstract**

An information processing device includes a processor configured to perform processing, the processing including: acquiring a first model to which training data is input; acquiring a second model to which the training data that has been processed according to a certain rule is input; and learning a third model that detects abnormal data using an output of the first model when the training data is input, an output of the second model when the processed training data processed according to the rule is input, and at least any one of feature amounts including a feature amount regarding the training data before being processed, a feature amount regarding the processed training data, a feature amount regarding a difference between the training data before being processed and the processed training data, a feature amount regarding normal data, and a feature amount regarding abnormal data.

## Description

### FIELD

The embodiment discussed herein is related to an information processing program, an information processing method, and an information processing device.

### BACKGROUND

Typically, there is a technique for creating a model that determines whether or not input query data is valid on the basis of training data through machine learning. On the other hand, an evasion attack attempts to make a model wrongly determine that invalid query data is normal by inputting the invalid query data that has been processed with reference to normal query data into the model.

As related art, for example, there is a technique for training N models and randomly selecting one of the N models using a pseudorandom number model selector. Furthermore, for example, there is a technique for generating noises of feature amount expression effective for a gradient-based evasion attack using normal training data, noise training data, and adversarial training data.

Examples of the related art include U.S. Patent Application Publication No. 2020/0104673 and U.S. Patent Application Publication No. 2019/0130110.

### SUMMARY

### TECHNICAL PROBLEM

However, with the typical technique, it is difficult to create a model that can accurately determine whether or not query data is normal. For example, there has been a problem in that, in a case where a model is created so that a probability that invalid query data created by an evasion attack is determined as abnormal is improved, a probability that normal query data is wrongly determined as abnormal increases.

In one aspect, an object of the present embodiment is to create a model that can accurately determine whether or not query data is normal.

### SOLUTION TO PROBLEM

According to an aspect of the embodiments, an information processing device includes a processor configured to perform processing, the processing including: acquiring a first model to which training data is input; acquiring a second model to which the training data that has been processed according to a certain rule is input; and learning a third model that detects abnormal data using an output of the first model when the training data is input, an output of the second model when the processed training data processed according to the rule is input, and at least any one of feature amounts including a feature amount regarding the training data before being processed, a feature amount regarding the processed training data, a feature amount regarding a difference between the training data before being processed and the processed training data, a feature amount regarding normal data, and a feature amount regarding abnormal data.

The object and advantages of the invention will be realized and attained by means of the elements and combinations particularly pointed out in the claims.

It is to be understood that both the foregoing general description and the following detailed description are exemplary and explanatory and are not restrictive of the invention.

### ADVANTAGEOUS EFFECTS OF INVENTION

According to one aspect, it is possible to create a model that can accurately determine whether or not query data is normal.

### BRIEF DESCRIPTION OF DRAWINGS

FIG. 1 is an explanatory diagram illustrating an example of an information processing method according to an embodiment;
FIG. 2 is an explanatory diagram illustrating an example of an abnormality detection system 200;
FIG. 3 is a block diagram illustrating a hardware configuration example of an information processing device 100;
FIG. 4 is a block diagram illustrating a functional configuration example of the information processing device 100;
FIG. 5 is an explanatory diagram illustrating an example of structured data;
FIG. 6 is an explanatory diagram illustrating an example of an operation of the information processing device 100;
FIG. 7 is an explanatory diagram illustrating an example in which a session length is calculated;
FIG. 8 is an explanatory diagram illustrating an example in which a difference between the session lengths is calculated;
FIG. 9 is an explanatory diagram (No. 1) illustrating an example of an effect obtained by the information processing device 100;
FIG. 10 is an explanatory diagram (No. 2) illustrating an example of the effect obtained by the information processing device 100;
FIG. 11 is a flowchart illustrating an example of a training processing procedure; and
FIG. 12 is a flowchart illustrating an example of an inference processing procedure.

### DESCRIPTION OF EMBODIMENTS

In one aspect, an object of the present embodiment is to create a model that can accurately determine whether or not query data is normal.

Hereinafter, embodiments of an information processing program, an information processing method, and an information processing device will be described in detail with reference to the drawings.

### (Example of Information Processing Method According to Embodiment)

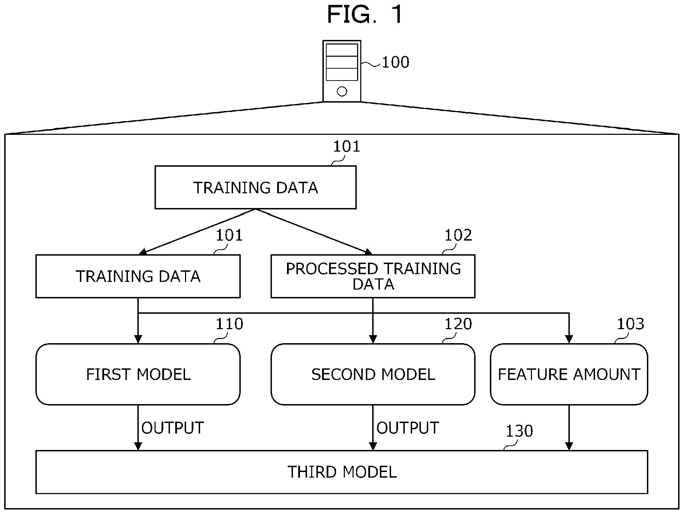

FIG. 1 is an explanatory diagram illustrating an example of an information processing method according to an embodiment. An information processing device 100 is a computer that learns a predetermined model through machine learning (ML). The predetermined model is, for example, a model used to detect invalid query data. For example, a case is considered where the invalid query data is generated by an evasion attack.

The evasion attack is an attack that processes the invalid query data with reference to normal query data and inputs the processed invalid query data into a model so as to make the model wrongly determine that the processed invalid query data is normal. The evasion attack processes the invalid query data, for example, by inserting a part of normal query data into the invalid query data. For example, a situation is considered in which the evasion attack causes the model to wrongly determine that log data of attack communication is log data of normal communication. Furthermore, for example, a situation is considered in which the evasion attack is performed so as to wrongly determine spam mail data as normal mail data.

Therefore, it is desired to create a model that can accurately determine whether or not query data is normal. Specifically, for example, it is desired to create the model that can correctly determine that the invalid query data created by the evasion attack is abnormal without wrongly determining that normal query data is abnormal. However, typically it is difficult to create the model that can accurately determine whether or not query data is normal.

Here, for example, a method 1 is considered that learns a model using training data referred to as an adversarial sample to which noise is added and is referred to as Adversarial Training. With the method 1, it is difficult to create the model that can accurately determine whether or not query data is normal. For example, with the method 1, it is difficult to reduce a probability that the invalid query data created by the evasion attack is wrongly determined as normal.

Furthermore, for example, a method 2 is considered that attempts to improve a probability for determining that invalid query data created by an evasion attack is abnormal by processing training data on the basis of the nature of the evasion attack and learning (i.e., training) a model using the processed training data. With the method 2, it is also difficult to create the model that can accurately determine whether or not query data is normal. For example, the method 2 tends to improve the probability that the invalid query data is correctly determined as abnormal as compared with the method 1. On the other hand, it is difficult to reduce the probability that normal query data is wrongly determined as abnormal. It is noted that the learning of a model by using the machine learning may be referred to as training of a model.

Furthermore, for example, there is a method 3 that is referred to as ensemble learning for combining the model obtained by the method 1 and the model obtained by the method 2 and learning (i.e., training) a new model. An example of the method 3 is Stacking. With the method 3, it is also difficult to create the model that can accurately determine whether or not query data is normal. For example, with the method 3, it is difficult to reduce the probability that the invalid query data created by the evasion attack is wrongly determined as normal.

In this way, typically, it is difficult to create a model that simultaneously increases a probability that normal query data is correctly determined as normal and a probability that invalid query data created by an evasion attack is correctly determined as abnormal.

In the following description, there is a case where the probability that normal query data is correctly determined as normal is referred to as "classification accuracy". For example, a degree of the probability that the normal query data is correctly determined as normal is defined as a degree of the classification accuracy. Furthermore, in the following description, there is a case where the probability that invalid query data created by an evasion attack is correctly determined as abnormal is referred to as an "attack resistance". For example, a degree of the probability that the invalid query data created by the evasion attack is correctly determined as abnormal is defined as a degree of the attack resistance.

In this way, in the present embodiment, an information processing method for creating a model that simultaneously increases a probability that normal query data is correctly determined as normal and a probability that invalid query data created by an evasion attack is correctly determined as abnormal will be described.

(1-1) An information processing device 100 acquires a first model 110 to which training data 101 is input. The first model 110 is, for example, a model that does not process the training data 101 and uses the training data 101 as an input. The first model 110 is, specifically, for example, a model learned through Adversarial Training. The first model 110 is implemented, for example, by a neural network, a logistic regression model, a support vector machine (SVM), a tree structure model, or the like. It is preferable, for example, that the first model 110 have relatively higher classification accuracy than a second model 120 and have a relatively higher probability that normal query data is correctly determined as normal.

The information processing device 100 acquires the first model 110, for example, by learning (i.e., training) the first model 110. The information processing device 100 may acquire the first model 110, for example, by receiving the first model 110 from another computer that learns the first model 110.

(1-2) The information processing device 100 acquires the second model 120 that is input after the training data 101 is processed according to a certain rule. The rule corresponds to the evasion attack. the rule specifies, for example, a method for processing the training data 101 so as to increase an attack resistance against an evasion attack. As a processing method, for example, a method is considered for assuming that an evasion attack is performed on the training data 101 and deleting a part of the training data 101. Specifically, for example, the processing method is a method for reducing D pieces of data having overlapped content when the training data 101 includes D pieces of data having overlapped content to 1 ≤ N < D pieces of data.

The second model 120 is a model that is learned by an algorithm different from that of the first model 110. The second model 120 is a model that uses the training data 101 as an input after processing the training data 101. The second model 120 is implemented, for example, by a neural network, a logistic regression model, a SVM, a tree structure model, or the like. It is preferable, for example, that the second model 120 have a relatively higher attack resistance than the first model 110 and have a relatively higher probability that the invalid query data is correctly determined as abnormal.

The information processing device 100 acquires the second model 120, for example, by learning the second model 120. The information processing device 100 may acquire the second model 120, for example, by receiving the second model 120 from another computer that learns the second model 120.

(1-3) The information processing device 100 learns a third model 130 using an output of the first model 110 when the training data 101 is input, an output of the second model 120 when the processed training data 102 is input, and a predetermined feature amount 103 as inputs. The processed training data 102 is processed, for example, according to the rule. The third model 130 is a model used to detect abnormal data. The third model 130 is, for example, a model used to determine whether or not query data is normal. Specifically, for example, the third model 130 is a model that outputs an attack certainty indicating a degree of a probability that query data is abnormal. The third model 130 is implemented, for example, by a neural network, a logistic regression model, a SVM, a tree structure model, or the like.

The predetermined feature amount 103 is a feature amount regarding an evasion attack. The predetermined feature amount 103 is, for example, a feature amount that may be an index used to evaluate a degree of certainty that an evasion attack is performed regarding a difference between the input of the first model 110 and the input of the second model 120. The predetermined feature amount 103 may be, for example, a feature amount that represents a feature of the training data 101 corresponding to a case where the evasion attack is not performed and may be an index used to evaluate whether or not the evasion attack has been performed. The predetermined feature amount 103 may be, for example, a feature amount 103 that represents a feature of the processed training data 102 corresponding to a case where the evasion attack has been performed and may be an index used to evaluate whether or not the evasion attack has been performed.

The predetermined feature amount 103 is, specifically, for example, a feature amount regarding a difference between the training data 101 before being processed and the processed training data 102. Here, in the evasion attack, for example, because a part of normal query data is inserted into invalid query data, the difference between the training data 101 before being processed and the processed training data 102 is a feature amount that may be an index used to evaluate the degree of certainty that the evasion attack has been performed. The predetermined feature amount 103 is, more specifically, for example, a difference between data lengths of the training data 101 before being processed and the processed training data 102.

The information processing device 100, for example, acquires the training data 101 and processes the training data 101 according to the rule. There may be a plurality of pieces of training data 101. The information processing device 100 acquires, for example, the output of the first model 110 when the training data 101 is input and the output of the second model 120 when the training data 102 processed according to the rule is input. Furthermore, the information processing device 100 calculates, for example, the difference between the data lengths of the training data 101 before being processed and the processed training data 102.

Then, for example, the information processing device 100 learns the third model 130 using the output of the first model 110, the output of the second model 120, and the difference between the data lengths of the training data 101 before being processed and the processed training data 102 as inputs. Thereafter, the information processing device 100 may determine whether or not query data is normal using the learned third model 130, for example. Furthermore, the information processing device 100 may, for example, transmit the learned third model 130 to another computer and determine whether or not the query data is normal by the another computer.

As a result, the information processing device 100 can learn the third model 130 that can accurately determine whether or not query data is normal. For example, the information processing device 100 can learn the third model 130 so that the probability that the normal query data is correctly determined as normal and the probability that the invalid query data created by the evasion attack is correctly determined as abnormal are simultaneously increased.

Specifically, for example, because the third model 130 uses the feature amount 103 regarding the evasion attack as an input, the output of the first model 110 of which the classification accuracy is relatively high and the output of the second model 120 of which the attack resistance is relatively high can be appropriately considered and can be reflected to the attack certainty to be output. Therefore, the third model 130 can consider the nature of the evasion attack, secure the classification accuracy, and secure the attack resistance.

Here, a case has been described where the predetermined feature amount 103 is the feature amount regarding the difference between the training data 101 before being processed and the processed training data 102. However, the embodiment is not limited to this. For example, there may be a case where the predetermined feature amount 103 is at least any one of the feature amount regarding the training data 101 before being processed, the feature amount regarding the processed training data 102, the feature amount regarding normal data, or the feature amount regarding attack data. The attack data corresponds to, for example, the invalid query data created by the evasion attack.

If the predetermined feature amount 103 is the feature amount regarding the training data 101 before being processed, the predetermined feature amount 103 represents the feature of the training data 101 corresponding to a case where the evasion attack is not performed and may be an index used to evaluate whether or not the evasion attack has been performed. Therefore, the third model 130 can appropriately consider the output of the first model 110 of which the classification accuracy is relatively high and the output of the second model 120 of which the attack resistance is relatively high based on the predetermined feature amount 103 and can accurately determine whether or not query data is normal.

If the predetermined feature amount 103 is the feature amount regarding the processed training data 102, the predetermined feature amount 103 represents the feature of the processed training data 102 corresponding to a case where the evasion attack has been performed and may be an index used to evaluate whether or not the evasion attack has been performed. Therefore, the third model 130 can appropriately consider the output of the first model 110 of which the classification accuracy is relatively high and the output of the second model 120 of which the attack resistance is relatively high based on the predetermined feature amount 103 and can accurately determine whether or not query data is normal.

If the predetermined feature amount 103 is the feature amount regarding the normal data, the predetermined feature amount 103 represents the feature of the query data corresponding to a case where the evasion attack is not performed and may be an index used to evaluate whether or not the evasion attack has been performed. Therefore, the third model 130 can appropriately consider the output of the first model 110 of which the classification accuracy is relatively high and the output of the second model 120 of which the attack resistance is relatively high based on the predetermined feature amount 103 and can accurately determine whether or not query data is normal.

If the predetermined feature amount 103 is the feature amount regarding the attack data, the predetermined feature amount 103 represents the feature of the query data corresponding to a case where the evasion attack is performed and may be an index used to evaluate whether or not the evasion attack has been performed. Therefore, the third model 130 can appropriately consider the output of the first model 110 of which the classification accuracy is relatively high and the output of the second model 120 of which the attack resistance is relatively high based on the predetermined feature amount 103 and can accurately determine whether or not query data is normal.

Here, a case has been described where the processing method is a method for deleting a part of the training data 101. However, the embodiment is not limited to this. For example, there may be a case where the processing method is a method for inserting a part of normal data into the training data 101 and sets the training data 101 to be in a state corresponding to a case where the evasion attack is performed.

Here, a case has been described where the information processing device 100 learns the third model 130 using the output of the first model 110, the output of the second model 120, and in addition, one type of the feature amount 103 as inputs. However, the embodiment is not limited to this. For example, there may be a case where the information processing device 100 learns the third model 130 using the output of the first model 110, the output of the second model 120, and in addition, the plurality of types of feature amounts 103 as inputs.

Here, a case has been described where the information processing device 100 learns the third model 130 using two types of models including the first model 110 of which the classification accuracy is relatively high and the second model 120 of which the attack resistance is relatively high. However, the embodiment is not limited to this. For example, there may be a case where the information processing device 100 learns the third model 130 using the plurality of models of which the classification accuracy is relatively high and the plurality of models of which the attack resistance is relatively high.

Furthermore, for example, there may be a case where the information processing device 100 learns the third model 130 using the single model of which the classification accuracy is relatively high and the plurality of models of which the attack resistance is relatively high. Furthermore, for example, there may be a case where the information processing device 100 learns the third model 130 using the plurality of models of which the classification accuracy is relatively high and the single model of which the attack resistance is relatively high.

### (Example of Abnormality Detection System 200)

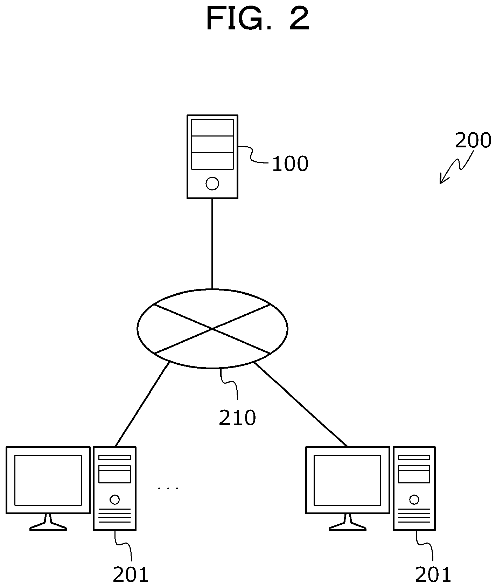

Next, an example of an abnormality detection system 200 to which the information processing device 100 illustrated in FIG. 1 is applied will be described with reference to FIG. 2.

FIG. 2 is an explanatory diagram illustrating an example of the abnormality detection system 200. In FIG. 2, the abnormality detection system 200 includes the information processing device 100 and a client device 201.

In the abnormality detection system 200, the information processing device 100 and the client device 201 are connected via a wired or wireless network 210. The network 210 is, for example, a local area network (LAN), a wide area network (WAN), the Internet, or the like.

The information processing device 100 acquires a first training data group. The first training data group is a group of pieces of training data used when the first model and the second model are learned. The training data is, for example, structured data. The training data corresponds to, for example, log data of communication performed by the client device 201, mail data received by the client device 201, or the like. The information processing device 100 acquires the first training data group, for example, by collecting the training data from the client device 201.

The information processing device 100 learns the first model and the second model on the basis of the first training data group. The information processing device 100 learns the first model, for example, using each piece of the training data of the first training data group as an input. A learning method is, for example, back propagation or the like. The information processing device 100 learns the second model, for example, by processing each piece of the training data of the first training data group, and then, using the processed data as an input.

The information processing device 100 acquires a second training data group. The second training data group is a group of training data used when the third model is learned. The second training data group is, for example, different from the first training data group. The second training data group may be, for example, the same as the first training data group. The information processing device 100 acquires the second training data group, for example, by collecting the training data from the client device 201.

The information processing device 100 acquires an output of the first model and an output of the second model for each piece of the training data of the second training data group. The information processing device 100 acquires the output of the first model in a case where the training data is used as an input, for example, for each piece of the training data of the second training data group. The information processing device 100 acquires the output of the second model in a case where the training data is processed, and then, used as an input, for example, for each piece of the training data of the second training data group.

The information processing device 100 calculates a feature amount representing a difference between training data before being processed and processed training data for each piece of the training data of the second training data group. The information processing device 100 learns the third model using the acquired output of the first model, the acquired output of the second model, and the calculated feature amount as inputs.

The information processing device 100 acquires query data. The query data is target data of an inquiry regarding whether or not the data is normal. The query data is, for example, structured data. The query data corresponds to, for example, log data of communication performed by the client device 201 or mail data received by the client device 201 or the like. The information processing device 100 acquires the query data, for example, by receiving the query data from the client device 201.

The information processing device 100 acquires the output of the first model and the output of the second model on the basis of the query data. The information processing device 100, for example, acquires the output of the first model in a case where the query data is used as an input. The information processing device 100, for example, acquires the output of the second model in a case where the query data is processed, and then, is used as an input. The information processing device 100 calculates a feature amount representing a difference between the query data before being processed and the processed query data. The information processing device 100 acquires an output of the third model in a case where the acquired output of the first model, the acquired output of the second model, and the calculated feature amount are used as inputs.

The information processing device 100 determines whether or not the query data is normal on the basis of the output of the third model. The information processing device 100 determines that the query data is abnormal, for example, if the output of the third model is equal to or more than a threshold. On the other hand, if the output of the third model is less than the threshold, the information processing device 100 determines that the query data is normal. The information processing device 100 transmits the determined result to the client device 201 that is a transmission source of the query data. The information processing device 100 is, for example, a server, a personal computer (PC), or the like.

The client device 201 is a computer that transmits the training data or the query data to the information processing device 100. For example, when communicating with another computer, the client device 201 generates log data of the communication, and transmits the generated log data to the information processing device 100 as the training data or the query data. The another computer is, for example, another client device 201. The another computer may be, for example, a device different from the another client device 201. The client device 201 may transmit, for example, mail data received from the another computer to the information processing device 100 as the training data or the query data.

The client device 201 receives the result of the determination regarding whether or not the query data is normal from the information processing device 100. The client device 201 outputs the result of the determination regarding whether or not the query data is normal so that a user of the client device 201 can refer to the result. The client device 201 is, for example, a PC, a tablet terminal, a smartphone, a wearable terminal, an Internet of Things (IoT), or the like.

The abnormality detection system 200 described above is used to prevent the user of the client device 201 from using invalid data created by an evasion attack and suffering a disadvantage, for example.

Specifically, for example, the abnormality detection system 200 treats the log data of the communication performed by the client device 201 as query data and detects the log data of the attack communication by determining whether or not the log data of the communication is normal. Then, the abnormality detection system 200 controls the client device 201 so that the user of the client device 201 can grasp the log data of the attack communication. Accordingly, the abnormality detection system 200 reduces the disadvantage for the user of the client device 201.

Specifically, for example, the abnormality detection system 200 treats the mail data received by the client device 201 as query data and determines whether or not the mail data received by the client device 201 is normal so as to detect spam mail data. Then, the abnormality detection system 200 controls the client device 201 so that the user of the client device 201 can grasp the spam mail data. Accordingly, the abnormality detection system 200 reduces the disadvantage for the user of the client device 201.

Specifically, for example, the abnormality detection system 200 treats feature data representing features of a portable executable (PE) file of software included in the client device 201 as query data. The abnormality detection system 200 detects software to be malware by determining whether or not the PE file is normal. Then, the abnormality detection system 200 controls the client device 201 so that the user of the client device 201 can grasp the software to be malware. Accordingly, the abnormality detection system 200 reduces the disadvantage for the user of the client device 201.

Here, a case has been described where the information processing device 100 collects the training data from the client device 201. However, the embodiment is not limited to this. For example, there may be a case where the information processing device 100 receives an input of the training data on the basis of an operation input by the user of the information processing device 100. Furthermore, for example, there may be a case where the information processing device 100 reads the training data from a detachable recording medium.

Here, a case has been described where the information processing device 100 acquires the first model and the second model by learning the first model and the second model on the basis of the first training data group. However, the embodiment is not limited to this. For example, there may be a case where the information processing device 100 acquires the first model and the second model by receiving the first model and the second model from another computer that learns the first model and the second model.

Here, a case has been described where the information processing device 100 acquires query data and determines whether or not the query data is normal using the third model. However, the embodiment is not limited to this. For example, the information processing device 100 may transmit the third model to another computer. In this case, the another computer acquires the query data and determines whether or not the query data is normal using the received third model.

Here, a case where the information processing device 100 and the client device 201 are different devices has been described. However, the embodiment is not limited thereto. For example, there may be a case where the information processing device 100 has a function as the client device 201. In this case, the abnormality detection system 200 does not need to include the client device 201.

### (Hardware Configuration Example of Information Processing Device 100)

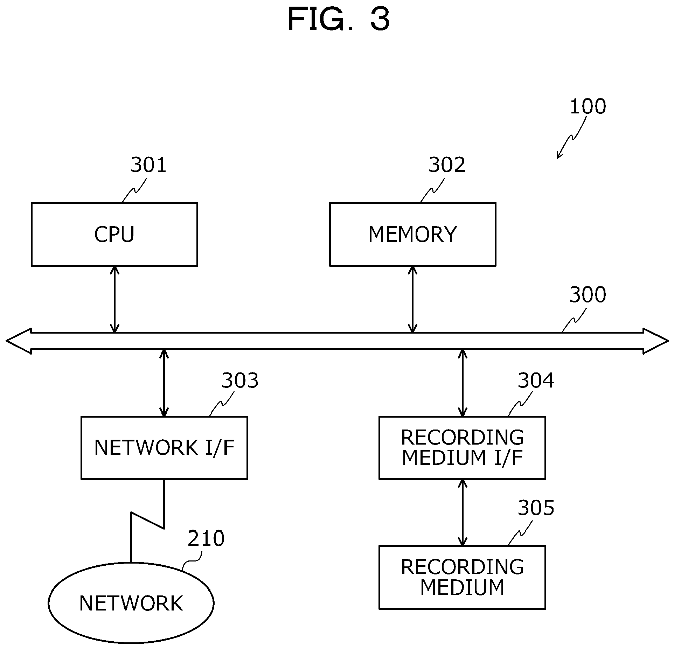

Next, a hardware configuration example of the information processing device 100 will be described with reference to FIG. 3.

FIG. 3 is a block diagram illustrating the hardware configuration example of the information processing device 100. In FIG. 3, the information processing device 100 includes a central processing unit (CPU) 301, a memory 302, a network interface (I/F) 303, a recording medium I/F 304, and a recording medium 305. Furthermore, these components are connected to each other by a bus 300.

Here, the CPU 301 performs overall control of the information processing device 100. The memory 302 includes, for example, a read only memory (ROM), a random access memory (RAM), a flash ROM, and the like. Specifically, for example, the flash ROM or the ROM stores various programs, and the RAM is used as a work area for the CPU 301. The programs stored in the memory 302 are loaded into the CPU 301 to cause the CPU 301 to execute coded processing.

The network I/F 303 is connected to the network 210 through a communication line, and is connected to another computer through the network 210. Then, the network I/F 303 manages an interface between the network 210 and an inside, and controls inputs and outputs of data to and from the another computer. The network I/F 303 is, for example, a modem, a LAN adapter, and the like.

The recording medium I/F 304 controls reading and writing of data to and from the recording medium 305 under the control of the CPU 301. The recording medium I/F 304 is, for example, a disk drive, a solid state drive (SSD), a universal serial bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be attachable to and detachable from the information processing device 100.

The information processing device 100 may include, for example, a keyboard, a mouse, a display, a printer, a scanner, a microphone, a speaker, or the like in addition to the components described above. Furthermore, the information processing device 100 may include a plurality of the recording medium I/Fs 304 and the recording media 305. Furthermore, the information processing device 100 does not need to include the recording medium I/F 304 and the recording medium 305.

### (Hardware Configuration Example of Client Device 201)

Since the hardware configuration example of the client device 201 is similar to the hardware configuration example of the information processing device 100 illustrated in FIG. 3, the description thereof is omitted.

### (Functional Configuration Example of Information Processing Device 100)

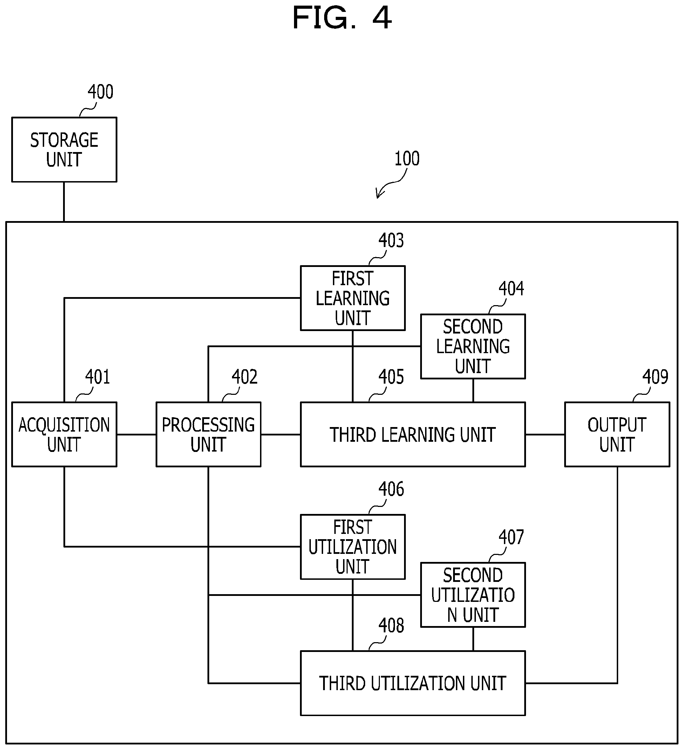

Next, a functional configuration example of the information processing device 100 will be described with reference to FIG. 4.

FIG. 4 is a block diagram illustrating the functional configuration example of the information processing device 100. The information processing device 100 includes a storage unit 400, an acquisition unit 401, a processing unit 402, a first learning unit 403, a second learning unit 404, a third learning unit 405, a first utilization unit 406, a second utilization unit 407, a third utilization unit 408, and an output unit 409.

The storage unit 400 is implemented by a storage area such as the memory 302 or the recording medium 305 illustrated in FIG. 3, for example. Hereinafter, a case where the storage unit 400 is included in the information processing device 100 will be described. However, the embodiment is not limited to this. For example, the storage unit 400 may be included in a device different from the information processing device 100, and content stored in the storage unit 400 may be able to be referred to by the information processing device 100.

The acquisition unit 401 to the output unit 409 function as examples of a control unit. For example, specifically, the acquisition unit 401 to the output unit 409 implement functions thereof by causing the CPU 301 to execute a program stored in the storage area such as the memory 302 or the recording medium 305 illustrated in FIG. 3 or by the network I/F 303. A processing result of each functional unit is stored in, for example, the storage area such as the memory 302 or the recording medium 305 illustrated in FIG. 3.

The storage unit 400 stores various types of information referred or updated in the processing of each functional unit. The storage unit 400 stores, for example, training data. The training data indicates an input x to a model. The training data is associated with an answer y from the model. The answer y is a correct answer of an output of the model according to the input x. The training data is, for example, structured data. The training data corresponds to, for example, log data of communication, mail data, or the like.

The storage unit 400 stores query data. The query data is target data of an inquiry regarding whether or not the data is normal. The query data is, for example, structured data. The query data corresponds to, for example, log data of communication, mail data, or the like. The query data may be invalid query data created by an attacker through an evasion attack.

The storage unit 400 stores, for example, rules. The rule corresponds to the evasion attack. The rule specifies, for example, a method for processing training data so as to increase an attack resistance against an evasion attack. The rule is, for example, applied when query data, in addition to the training data is processed. Specifically, for example, the rule assumes that an evasion attack have already been performed on the training data or the query data and specifies a method for deleting a part of the training data or the query data. More specifically, for example, the rule is a method for reducing D pieces of data having overlapped content to 1 ≤ N < D pieces of data if the D pieces of data having the overlapped content are included in the training data or the query data. Furthermore, specifically, for example, the rule may specify a method for processing the training data or the query data by inserting a part of normal data into the training data or the query data and setting the data to be in a state corresponding to a case where the evasion attack has been performed.

The storage unit 400 stores, for example, the first model to which the training data or the query data is input. The first model is, for example, a model that uses the training data or the query data as an input without processing the training data or the query data. The first model is, specifically, for example, a model learned through Adversarial Training. The first model is implemented, for example, by a neural network, a logistic regression model, a SVM, a tree structure model, or the like. It is preferable, for example, that the first model have relatively higher classification accuracy than a second model and have a relatively higher probability that normal query data is correctly determined as normal. Specifically, for example, the storage unit 400 stores a parameter of the first model. The first model is, for example, acquired by the acquisition unit 401 or learned by the first learning unit 403.

The storage unit 400 acquires the second model to which the training data or the query data that has been processed is input according to the rule. The second model is a model that is learned by an algorithm different from the first model. The second model is implemented, for example, by a neural network, a logistic regression model, a SVM, a tree structure model, or the like. It is preferable, for example, that the second model have a relatively higher attack resistance than the first model and have a relatively higher probability that invalid query data is correctly determined as abnormal. The second model is, for example, acquired by the acquisition unit 401 or is learned by the second learning unit 404.

The storage unit 400 stores a third model using an output of the first model, an output of the second model, and a predetermined feature amount as inputs. The third model is a model used to detect abnormal data. The third model is, for example, a model used to determine whether or not query data is normal. Specifically, for example, the third model is a model that outputs an attack certainty indicating a degree of a probability that query data is abnormal. The third model is implemented, for example, by a neural network, a logistic regression model, a SVM, a tree structure model, or the like. The third model is, for example, learned by the third learning unit 405.

The predetermined feature amount is a feature amount regarding an evasion attack. The predetermined feature amount is, for example, a feature amount that may be an index used to evaluate a degree of certainty that an evasion attack is performed regarding a difference between the input of the first model and the input of the second model. The predetermined feature amount may be, for example, a feature amount that represents a feature of the training data or the query data corresponding to a case where the evasion attack is not performed and may be an index used to evaluate whether or not the evasion attack has been performed. The predetermined feature amount may be, for example, a feature amount that represents a feature of the training data or the query data corresponding to a case where the evasion attack is performed and may be an index used to evaluate whether or not the evasion attack has been performed.

Specifically, for example, the predetermined feature amount is a feature amount regarding a difference between the training data before being processed and the processed training data or the query data before being processed and the processed query data. Here, in the evasion attack, for example, because a part of normal query data is inserted into invalid query data, the difference between the training data before being processed and the processed training data or between the query data before being processed and the processed query data is a feature amount that may be an index used to evaluate the degree of certainty that the evasion attack has been performed. More specifically, for example, the predetermined feature amount is a difference between data lengths of the training data before being processed and the processed training data or the query data before being processed and the processed query data. The data length is, for example, a session length. The session length is the number of commands included in the training data or the query data. Because the third model uses the feature amount regarding the evasion attack as an input, the output of the first model of which the classification accuracy is relatively high and the output of the second model of which the attack resistance is relatively high can be appropriately considered and can be reflected to the attack certainty to be output.

Specifically, for example, the predetermined feature amount may be a feature amount regarding the training data before being processed or the query data before being processed. If the predetermined feature amount is the feature amount regarding the training data before being processed or the query data before being processed, the predetermined feature amount represents the feature of the training data or the query data corresponding to a case where the evasion attack is not performed and may be an index used to evaluate whether or not the evasion attack has been performed. Therefore, the third model can appropriately consider the output of the first model of which the classification accuracy is relatively high and the output of the second model of which the attack resistance is relatively high according to the predetermined feature amount and can reflect the considered outputs to the attack certainty to be output.

Specifically, for example, the predetermined feature amount may be a feature amount regarding the processed training data or the processed query data. If the predetermined feature amount is the feature amount regarding the processed training data or the processed query data, the predetermined feature amount represents the feature of the training data or the query data corresponding to a case where the evasion attack has been performed and may be an index used to evaluate whether or not the evasion attack has been performed. Therefore, the third model can appropriately consider the output of the first model of which the classification accuracy is relatively high and the output of the second model of which the attack resistance is relatively high according to the predetermined feature amount and can reflect the considered outputs to the attack certainty to be output.

Specifically, for example, the predetermined feature amount may be a feature amount regarding normal data. The feature amount regarding the normal data is, for example, the number of pieces of specific data included in the normal data. The specific data is, for example, a specific command. If the predetermined feature amount is the feature amount regarding the normal data, the predetermined feature amount represents the feature of the training data or the query data corresponding to a case where the evasion attack is not performed and may be an index used to evaluate whether or not the evasion attack has been performed. Therefore, the third model can appropriately consider the output of the first model of which the classification accuracy is relatively high and the output of the second model of which the attack resistance is relatively high according to the predetermined feature amount and can reflect the considered outputs to the attack certainty to be output.

Specifically, for example, the predetermined feature amount may be a feature amount regarding attack data. The attack data corresponds to, for example, the invalid query data created by the evasion attack. The feature amount regarding the attack data is, for example, the number of pieces of specific data included in the attack data. The specific data is, for example, a specific command. If the predetermined feature amount is the feature amount regarding the attack data, the predetermined feature amount represents the feature of the training data or the query data corresponding to a case where the evasion attack has been performed and may be an index used to evaluate whether or not the evasion attack has been performed. Therefore, the third model can appropriately consider the output of the first model of which the classification accuracy is relatively high and the output of the second model of which the attack resistance is relatively high according to the predetermined feature amount and can reflect the considered outputs to the attack certainty to be output.

Specifically, for example, the predetermined feature amount may be a difference between a data length of the training data before being processed or the query data before being processed and an average value of the data length. The average value is, for example, calculated on the basis of a training data group before being processed or a query data group before being processed that has been acquired in the past. Specifically, for example, the predetermined feature amount may be a difference between a data length of the processed training data or the processed query data and an average value of the data length. The average value is, for example, calculated on the basis of a processed training data group or a processed query data group that has been acquired in the past.

Specifically, for example, the predetermined feature amount may be a statistical value regarding the difference between the data lengths of the training data before being processed and the processed training data or the query data before being processed and the processed query data. The statistical value is, for example, the maximum value, the minimum value, the average value, the mode, the median, or the like. The statistical value may be a variance, a standard deviation, or the like.

The acquisition unit 401 acquires various types of information to be used for the processing of each functional unit. The acquisition unit 401 stores the acquired various types of information in the storage unit 400 or outputs the acquired various types of information to each functional unit. Furthermore, the acquisition unit 401 may output the various types of information stored in the storage unit 400 to each functional unit. The acquisition unit 401 acquires various types of information, for example, on the basis of an operation input of the user of the information processing device 100. The acquisition unit 401 may receive various types of information from a device different from the information processing device 100, for example.

The acquisition unit 401 acquires training data. The acquisition unit 401 acquires the training data by collecting the training data from the client device 201, for example, at a predetermined timing. The predetermined timing is set by a user of the information processing device 100. The predetermined timing is, for example, at certain time intervals. The predetermined timing may be a timing when a predetermined operation input is made by the user of the information processing device 100.

Specifically, for example, the acquisition unit 401 acquires a first training data group. The first training data group is a group of one or more pieces of training data used when the first model and the second model are learned. Furthermore, specifically, for example, the acquisition unit 401 acquires a second training data group. The second training data group is a group of one or more pieces of training data used when the third model is learned. The second training data group is, for example, different from the first training data group. The second training data group may be, for example, the same as the first training data group.

There may be a case where the acquisition unit 401 does not acquire the first training data group, the first learning unit 403 does not learn the first model, and the second learning unit 404 does not learn the second model. In this case, the acquisition unit 401 acquires, for example, the first model and the second model. Specifically, for example, the acquisition unit 401 acquires the first model and the second model by receiving the first model and the second model from another computer. In this case, the another computer includes the first learning unit 403 and the second learning unit 404. In this case, the information processing device 100 does not need to include the first learning unit 403 and the second learning unit 404.

The acquisition unit 401 acquires query data. The acquisition unit 401 acquires, for example, the query data by receiving the query data from the client device 201.

The acquisition unit 401 may accept a start trigger to start processing of any one of the functional units. The start trigger is, for example, a predetermined operation input by the user of the information processing device 100. The start trigger may be, for example, receipt of predetermined information from another computer. The start trigger may be, for example, output of predetermined information by any one of the functional units.

For example, the acquisition unit 401 may accept the acquisition of the training data as a start trigger to start processing of the first learning unit 403, the second learning unit 404, and the third learning unit 405. Specifically, for example, the acquisition unit 401 may accept the acquisition of the first training data group as a start trigger to start the processing of the first learning unit 403 and the second learning unit 404. Specifically, for example, the acquisition unit 401 may accept the acquisition of the second training data group as a start trigger to start processing of the third learning unit 405. For example, the acquisition unit 401 may accept the acquisition of the query data as a start trigger to start processing of the first utilization unit 406, the second utilization unit 407, and the third utilization unit 408.

The processing unit 402 processes the acquired training data according to a rule. The processing unit 402 processes the acquired training data by deleting a part of the acquired training data, for example, according to a rule corresponding to the evasion attack. Specifically, for example, the processing unit 402 reduces D pieces of data having overlapped content to 1 ≤ N < D pieces of data if the acquired training data includes the D pieces of data having the overlapped content. As a result, the processing unit 402 can process the acquired training data into a format suitable for the input of the second model of which the attack resistance is relatively high.

Furthermore, the processing unit 402 may process the acquired training data by inserting a part of the normal data into the acquired training data, for example, according to the rule corresponding to the evasion attack. As a result, the processing unit 402 can process the acquired training data into a format suitable for the input of the second model of which the attack resistance is relatively high.

The processing unit 402 calculates a predetermined feature amount regarding the training data. The processing unit 402 calculates, for example, a feature amount regarding a difference between the training data before being processed and the processed training data as the predetermined feature amount. Specifically, for example, the processing unit 402 calculates a difference between the data lengths of the training data before being processed and the processed training data as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a feature amount regarding the training data before being processed as the predetermined feature amount. Specifically, for example, the processing unit 402 calculates a data length of the training data before being processed as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a feature amount regarding the processed training data as the predetermined feature amount. Specifically, for example, the processing unit 402 calculates a data length of the processed training data as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a feature amount regarding the normal data as the predetermined feature amount. Specifically, for example, the processing unit 402 calculates a data length of the normal data as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a feature amount regarding the attack data as the predetermined feature amount. Specifically, for example, the processing unit 402 calculates a data length of the attack data as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a difference between the data length of the training data before being processed and an average value of the data length as the predetermined feature amount. The average value is calculated, for example, on the basis of a training data group before being processed that has been acquired in the past. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a difference between the data length of the processed training data and an average value of the data length as the predetermined feature amount. The average value is calculated, for example, on the basis of a processed training data group that has been acquired in the past. As a result, the processing unit 402 can obtain a feature amount that may be an index to appropriately consider the output of the first model of which the classification accuracy is relatively high and the output of the second model of which the attack resistance is relatively high.

The processing unit 402 processes the acquired query data according to the rule. The processing unit 402 processes the acquired query data by deleting a part of the acquired query data, for example, according to the rule corresponding to the evasion attack. Specifically, for example, the processing unit 402 reduces D pieces of data having overlapped content to 1 ≤ N < D pieces of data if the acquired query data includes the D pieces of data having the overlapped content. As a result, the processing unit 402 can process the acquired query data into a format suitable for the input of the second model of which the attack resistance is relatively high.

Furthermore, the processing unit 402 may process the acquired query data by inserting a part of the normal data into the acquired query data, for example, according to the rule corresponding to the evasion attack. As a result, the processing unit 402 can process the acquired query data into a format suitable for the input of the second model of which the attack resistance is relatively high.

The processing unit 402 calculates a predetermined feature amount regarding the query data. The processing unit 402 calculates, for example, a feature amount regarding a difference between the query data before being processed and the processed query data as the predetermined feature amount. Specifically, for example, the processing unit 402 calculates a difference between the data lengths of the query data before being processed and the processed query data as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a feature amount regarding the query data before being processed as the predetermined feature amount. Specifically, for example, the processing unit 402 calculates a data length of the query data before being processed as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a feature amount regarding the processed query data as the predetermined feature amount. Specifically, for example, the processing unit 402 calculates the data length of the processed query data as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a feature amount regarding the normal data as the predetermined feature amount. Specifically, for example, the processing unit 402 calculates a data length of the normal data as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a feature amount regarding the attack data as the predetermined feature amount. Specifically, for example, the processing unit 402 calculates a data length of the attack data as the predetermined feature amount. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a difference between the data length of the query data before being processed and an average value of the data length as the predetermined feature amount. The average value is calculated, for example, on the basis of a query data group before being processed that has been acquired in the past. As a result, the processing unit 402 can obtain a feature amount that may be an index to appropriately consider the output of the first model of which the classification accuracy is relatively high and the output of the second model of which the attack resistance is relatively high.

The processing unit 402 calculates, for example, a difference between the data length of the processed query data and an average value of the data length as the predetermined feature amount. The average value is calculated, for example, on the basis of a processed query data group that has been acquired in the past. As a result, the processing unit 402 can obtain a feature amount that may be an index to appropriately consider the output of the first model of which the classification accuracy is relatively high and the output of the second model of which the attack resistance is relatively high.

The first learning unit 403 acquires the first model by learning the first model using predetermined training data as an input. The predetermined training data is each piece of the training data included in the first training data group. For example, the first learning unit 403 learns the first model by determining a parameter of the first model so that an output of the first model according to the input x included in the predetermined training data is the answer y corresponding to the predetermined training data. As a result, the first learning unit 403 can obtain the first model of which the classification accuracy is relatively high.

The second learning unit 404 acquires the second model by learning the second model using the predetermined processed training data as an input. For example, the second learning unit 404 learns the second model by determining a parameter of the second model so that an output of the second model according to the input x included in the predetermined processed training data is the answer y corresponding to the predetermined processed training data. The answer y corresponding to the predetermined processed training data is the same as the answer y corresponding to the predetermined training data before being processed. As a result, the first learning unit 403 can obtain the second model of which the attack resistance is relatively high.

The third learning unit 405 learns the third model using the output of the first model when the training data is input, the output of the second model when the processed training data processed according to the rule is input, and the predetermined feature amount as inputs. The training data is, for example, each piece of the training data included in the second training data group.

For example, the third learning unit 405 learns the third model using the output of the first model, the output of the second model, a combination of the feature amounts regarding the training data before and after processing, and the feature amount regarding the difference between the training data before being processed and the processed training data as inputs. The combination includes, for example, the feature amount regarding the training data before being processed and the feature amount regarding the processed training data. Specifically, for example, the combination includes a data length of the training data before being processed and a data length of the processed training data. As a result, the third learning unit 405 can obtain the third model that appropriately considers the output of the first model of which the classification accuracy is relatively high and the output of the second model of which the attack resistance is relatively high and outputs an attack certainty.

The first utilization unit 406 acquires a first output of the first model when the query data before being processed is input. The first utilization unit 406, for example, acquires a first certainty output from the first model in response to the input of the query data before being processed to the first model as the first output. The first certainty is an index value indicating a degree of a probability that query data is abnormal. As a result, the first utilization unit 406 can obtain the first output of the first model of which the classification accuracy is relatively high and makes the third model enable to consider the first output of the first model of which the classification accuracy is relatively high.

The second utilization unit 407 acquires a second output of the second model when the processed query data is input. The second utilization unit 407, for example, acquires a second certainty output from the second model in response to the input of the processed query data to the second model as the second output. The second certainty is an index value indicating a degree of a probability that query data is abnormal. As a result, the second utilization unit 407 can obtain the second output of the second model of which the attack resistance is relatively high and can make the third model enable to consider the second output of the second model of which the attack resistance is relatively high.

The third utilization unit 408 acquires a third output of the learned third model when the acquired first output, the acquired second output, and the calculated predetermined feature amount are input. The third utilization unit 408 acquires a third certainty output from the third model in response to the inputs of the first output, the second output, and the predetermined feature amount to the third model as the third output. The third certainty is an index value indicating a probability that query data is abnormal and is an attack certainty. As a result, the third utilization unit 408 can appropriately consider the output of the first model of which the classification accuracy is relatively high and the output of the second model of which the attack resistance is relatively high on the basis of the predetermined feature amount and reflect the outputs to the attack certainty to be output. Therefore, the third utilization unit 408 can obtain the attack certainty that accurately represents whether or not the query data is normal.

The third utilization unit 408 may determine whether or not the query data is normal on the basis of the third output. The third utilization unit 408, for example, determines that the query data is abnormal if the attack certainty is equal to or more than a threshold. On the other hand, for example, if the attack certainty is less than the threshold, the third utilization unit 408 determines that the query data is normal. As a result, the third utilization unit 408 can accurately determine whether or not the query data is normal. The third utilization unit 408 can simultaneously increase, for example, a probability that normal query data is correctly determined as normal and a probability that invalid query data created by an evasion attack is correctly determined as abnormal.

The output unit 409 outputs a processing result of at least any one of functional units. An output format is, for example, display on a display, print output to a printer, transmission to an external device by the network I/F 303, or storage in the storage area such as the memory 302 or the recording medium 305. As a result, the output unit 409 makes it possible to notify the user of the information processing device 100 of a processing result of at least any one of functional units and can improve convenience of the information processing device 100.

The output unit 409 outputs the third model. The output unit 409 transmits, for example, the third model to another computer. The another computer may be, for example, the client device 201. As a result, the output unit 409 can make the another computer enable to accurately determine whether or not the query data is normal.

The output unit 409 outputs the third output of the third model. The output unit 409 transmits, for example, the third output to another computer. The another computer is, for example, the client device 201 that is a transmission source of the query data. As a result, the output unit 409 allows a user of the client device 201 to refer to the third output. The output unit 409 can easily avoid a situation where the user of the client device 201 wrongly trusts invalid query data and is disadvantaged.

Here, a case has been described where the information processing device 100 includes the first utilization unit 406, the second utilization unit 407, and the third utilization unit 408. However, the embodiment is not limited to this. For example, there may be a case where the information processing device 100 does not include the first utilization unit 406, the second utilization unit 407, and the third utilization unit 408. In this case, for example, another computer includes the first utilization unit 406, the second utilization unit 407, and the third utilization unit 408 and acquires the first model, the second model, and the third model from the information processing device 100.

Here, a case has been described where the third learning unit 405 learns the third model using the output of the first model, the output of the second model, and in addition, one type of the feature amount as inputs. However, the embodiment is not limited to this. For example, there may be a case where the third learning unit 405 learns the third model using the output of the first model, the output of the second model, and in addition, the plurality of types of feature amounts as inputs.

Here, a case has been described where the third learning unit 405 learns the third model using two types of models including the first model of which the classification accuracy is relatively high and the second model of which the attack resistance is relatively high. However, the embodiment is not limited to this. For example, there may be a case where the third learning unit 405 learns the third model using the plurality of models of which the classification accuracy is relatively high and the plurality of models of which the attack resistance is relatively high.

Furthermore, for example, there may be a case where the third learning unit 405 learns the third model using the single model of which the classification accuracy is relatively high and the plurality of models of which the attack resistance is relatively high. Furthermore, for example, there may be a case where the third learning unit 405 learns the third model using the plurality of models of which the classification accuracy is relatively high and the single model of which the attack resistance is relatively high.

Here, for example, there may be a case where the acquisition unit 401 acquires training data referred to as an adversarial sample to which noise is added as one type of the training data. In this case, the first learning unit 403 learns a model, for example, through Adversarial Training. Furthermore, the adversarial sample to which noise is added may be created by the information processing device 100.

Furthermore, for example, there may be a case where the acquisition unit 401 acquires training data to which a part of normal data has been inserted as one type of the training data. In this case, it is preferable for the processing unit 402, for example, to use a rule for deleting a part of the training data. Furthermore, the first learning unit 403 learns a model, for example, through Adversarial Training. Furthermore, the training data to which a part of the normal data has been inserted may be created by the information processing device 100.

### (Example of Operation of Information Processing Device 100)

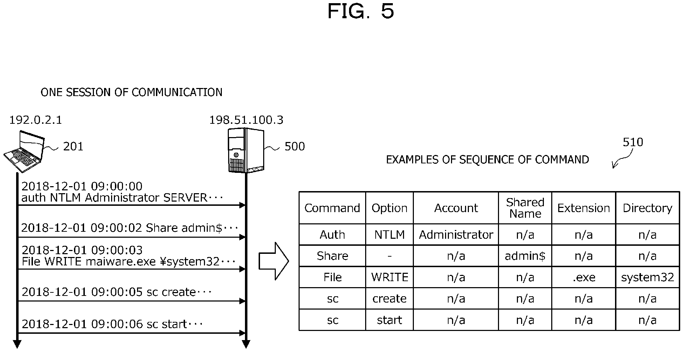

Next, an example of an operation of the information processing device 100 will be described with reference to FIGs. 5 to 10. Specifically, for example, first, an example of structured data that may be training data or query data acquired by the information processing device 100 will be described with reference to FIG. 5.

FIG. 5 is an explanatory diagram illustrating an example of the structured data. In FIG. 5, it is assumed that the client device 201 determine whether or not log data of communication for one session is normal when communicating with another computer 500. The log data of the communication is expressed as the structured data.

There, it is assumed that the client device 201 transmit log data of communication in the past to the information processing device 100 as training data. Furthermore, it is assumed that the client device 201 transmit log data of communication for this time to the information processing device 100 as query data when communicating with the another computer 500.

The structured data includes one or more pieces of data indicating a combination of one or more attribute values regarding communication. The structured data is, for example, data having a concept of rows and columns. The structured data corresponds to, for example, a table 510. The data indicates a single processing in communication. The data corresponds to, for example, a record of the table 510.

The attributes include a processing name (Command), an option (Option), an account (Account), a Shared Name, an extension (Extension), a directory (Directory), or the like. An attribute value is a feature amount of the attribute.

An object of the evasion attack is to increase causes of wrongly determining that invalid structured data is normal by inserting some pieces of data included in normal structured data into the invalid structured data. Therefore, for example, there is a case where the structured data created by the evasion attack tends to include a plurality of pieces of data having the same combination of the plurality of attribute values. Furthermore, there is a case where the structured data created by the evasion attack tends to include a plurality of pieces of data having the same attribute value.

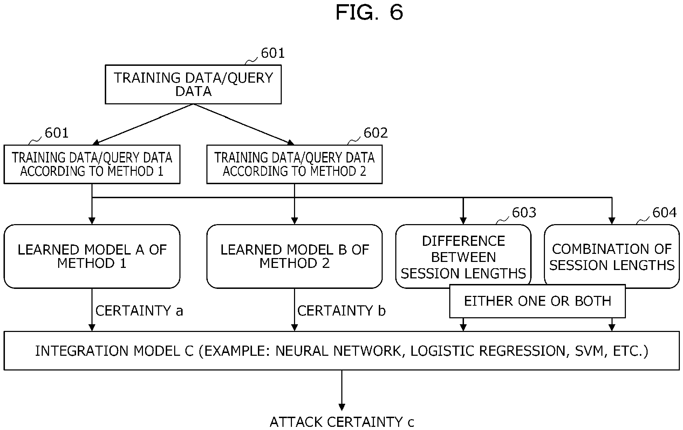

It is assumed that, in consideration of the tendency described above, the information processing device 100 store a rule such that D pieces of data having overlapped content in the structured data are reduced to 1 ≤ N < D pieces of data as the rule for processing the structured data. Here, it is assumed that the information processing device 100 acquire the structured data to be the training data or the query data. Next, shifting to the description of FIG. 6, an example of an operation of the information processing device 100 using the structured data 601 to be the acquired training data or query data will be described.

FIG. 6 is an explanatory diagram illustrating an example of the operation of the information processing device 100. In FIG. 6, the information processing device 100 includes a model A learned by a method 1 and a model B learned by a method 2. The model A has relatively high classification accuracy, and the structured data 601 is input to the model A. The model B has a relatively high attack resistance, and the structured data 601 is processed, and then, input to the model B.

(6-1) The information processing device 100 processes the structured data 601 according to a rule and obtains processed structured data 602. The information processing device 100, for example, reduces D pieces of data having overlapped content in the structured data 601 to 1 ≤ N < D pieces of data.

(6-2) The information processing device 100 inputs the structured data 601 to the model A. The information processing device 100 acquires a certainty a output from the model A in response to the input of the structured data 601. The certainty a is an index value indicating a degree of a probability that the structured data 601 is abnormal. Because the certainty a is output from the model A of which the classification accuracy is relatively high, in a case where the structured data 601 is normal, the certainty a tends to hardly increase.

(6-3) The information processing device 100 inputs the processed structured data 602 to the model B. The information processing device 100 acquires a certainty b output from the model B in response to the input of the processed structured data 602. The certainty b is an index value indicating a degree of a probability that the structured data 601 is abnormal. Because the certainty b is output from the model B of which the attack resistance is relatively high, in a case where the structured data 601 is abnormal, the certainty b tends to hardly decrease.

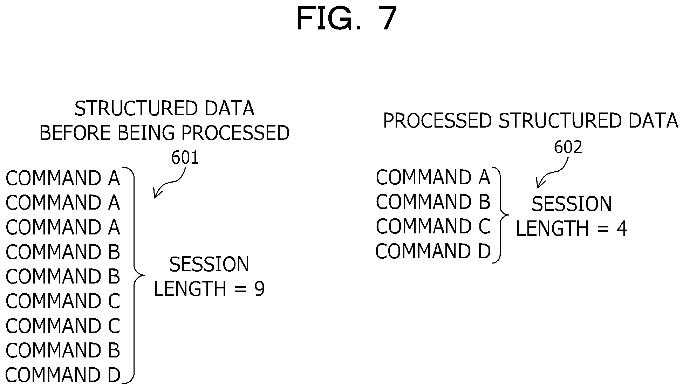

(6-4) The information processing device 100 calculates a session length of the structured data 601 before being processed and a session length of the processed structured data 602. An example in which the session length is calculated will be described later, specifically, for example, with reference to FIG. 7. The session length is the number of commands in communication. In other words, the session length corresponds to the number of records in a table 510 in the structured data 601 and 602 and is the number of pieces of data indicating one processing.

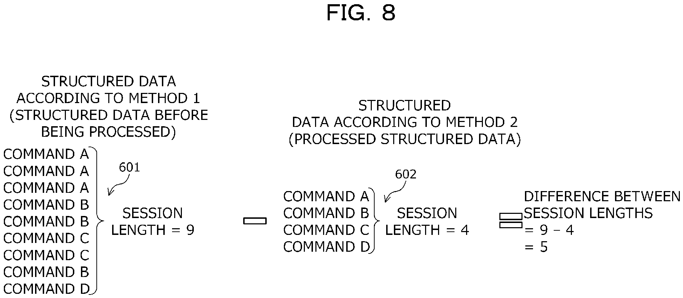

Then, the information processing device 100 calculates a difference 603 between the session length of the structured data 601 before being processed and the session length of the processed structured data 602. Specifically, for example, an example in which the difference between the session lengths is calculated will be described later with reference to FIG. 8. Furthermore, the information processing device 100 specifies a combination 604 of the session length of the structured data 601 before being processed and the session length of the processed structured data 602. The information processing device 100 does not need to specify one of the difference 603 and the combination 604.

(6-5) The information processing device 100 inputs the certainty a, the certainty b, the difference 603, and the combination 604 to an integration model C. The information processing device 100 acquires an attack certainty c output from the integration model C in response to the inputs of the certainty a, the certainty b, the difference 603, and the combination 604.

(6-6) If the structured data 601 is training data, the information processing device 100 learns the integration model C by updating a parameter of the integration model C on the basis of the attack certainty c. Furthermore, if the structured data 601 is query data, the information processing device 100 determines whether or not the structured data 601 is normal on the basis of the attack certainty c.

As a result, the information processing device 100 can learn the integration model C that can accurately determine whether or not the query data is normal. For example, the information processing device 100 can learn the integration model C so that the probability that the normal query data is correctly determined as normal and the probability that the invalid query data created by the evasion attack is correctly determined as abnormal are simultaneously increased.

Specifically, for example, because the difference 603 and the combination 604 are used as inputs, the integration model C can appropriately consider an output of the model A of which the classification accuracy is relatively high and an output of the model B of which the attack resistance is relatively high and can reflect the outputs to the attack certainty c to be output. Therefore, the integration model C can consider the nature of the evasion attack, secure the classification accuracy, and secure the attack resistance.

Furthermore, the information processing device 100 can accurately determine whether or not the query data is normal using the integration model C. The information processing device 100 can, for example, correctly determine that normal query data is normal and correctly determine that invalid query data created by the evasion attack is abnormal. Next, shifting to the description of FIG. 7, an example will be described where the information processing device 100 calculates a session length.

FIG. 7 is an explanatory diagram illustrating an example in which the session length is calculated. In FIG. 7, the structured data 601 before being processed includes pieces of data respectively corresponding to nine commands including a command A, a command A, a command A, a command B, a command B, a command C, a command C, a command B, and a command D in sequence. The processed structured data 602 includes pieces of data respectively corresponding to four commands including a command A, a command B, a command C, and a command D in sequence.

The session length corresponds to the number of commands issued in communication for one session. Therefore, the information processing device 100 specifies nine that is the number of pieces of data included in the structured data 601 before being processed as the session length of the structured data 601 before being processed. Furthermore, the information processing device 100 specifies four that is the number of pieces of data included in the processed structured data 602 as the session length of the processed structured data 602. Next, shifting to the description of FIG. 8, an example will be described where the information processing device 100 calculates a difference between session lengths.

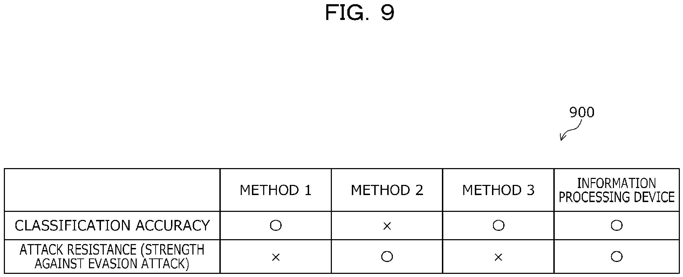

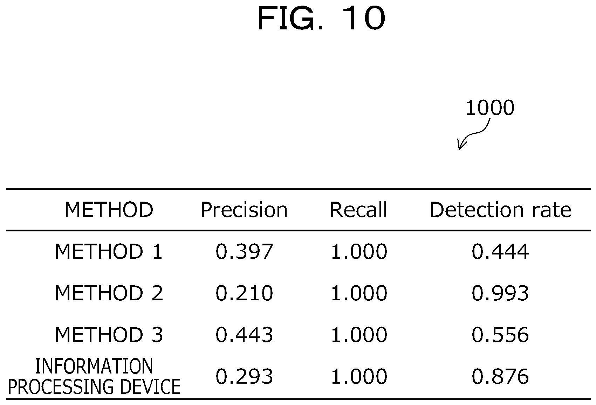

FIG. 8 is an explanatory diagram illustrating an example in which the difference between the session lengths is calculated. In FIG. 8, the information processing device 100 specifies five that is a difference obtained by subtracting four that is the number of pieces of data included in the processed structured data 602 from nine that is the number of pieces of data included in the structured data 601 before being processed as the difference between the session lengths. Next, shifting to the description of FIGs. 9 and 10, an example of an effect obtained by the information processing device 100 will be described.

FIGs. 9 and 10 are explanatory diagrams illustrating an example of the effect obtained by the information processing device 100. In FIG. 9, a method 1 creates and uses only a model of which classification accuracy is relatively high. For example, the method 1 creates and uses only the model A. A method 2 creates and uses only a model of which an attack resistance is relatively high. For example, the method 2 creates and uses only the model B.

A method 3 simply combines a model of which classification accuracy is relatively high and a model of which an attack resistance is relatively high through ensemble learning. The method 3 simply combines the model A and the model B. The method 3 is different from the information processing device 100 and does not use the predetermined feature amount.

As illustrated in Table 900 in FIG. 9, the method 1 has a problem in that, because the attack resistance is relatively low although the classification accuracy is relatively high, a probability that invalid query data is wrongly determined as normal becomes relatively higher. The method 2 has a problem in that, because the classification accuracy is relatively low although the attack resistance is relatively high, a probability that normal query data is wrongly determined as abnormal becomes relatively higher.

The method 3 has a problem in that, because the attack resistance is relatively low although the classification accuracy is relatively high, a probability that invalid query data is wrongly determined as normal is relatively high. On the other hand, the information processing device 100 can set the classification accuracy to be relatively higher and the attack resistance to be relatively higher and can accurately determine whether or not the query data is normal. Next, description of FIG. 10 will be made.

In FIG. 10, Precision (classification accuracy) is an evaluation index representing a rate of query data that is truly abnormal among query data that has been determined as abnormal. Recall is an evaluation index representing a rate of query data that is determined as abnormal among the query data that is truly abnormal. Detection rate (attack resistance against evasion attack) is an evaluation index representing a rate of the query data determined as abnormal among the query data created by the evasion attack.

As illustrated in Table 1000 in FIG. 10, the method 1 has a relatively low Detection rate and a relatively low attack resistance. The method 2 has a relatively low Precision and relatively low classification accuracy. The method 3 has a relatively low Detection rate and a relatively low attack resistance. On the other hand, the information processing device 100 can increase both of Precision and Detection rate.

Here, a case has been described where the structured data includes one or more pieces of data indicating a combination of one or more attribute values regarding communication. However, the embodiment is not limited to this. For example, there may be a case where the structured data includes one or more pieces of data indicating a combination of one or more attribute values regarding a mail. In this case, the attribute is, for example, a sender, an address, a header, or the like of the mail. Furthermore, for example, there may be a case where the structured data includes one or more pieces of data indicating a combination of one or more attribute values regarding software. In this case, the attribute is, for example, information regarding a feature of a PE file of the software.

### (Training Processing Procedure)

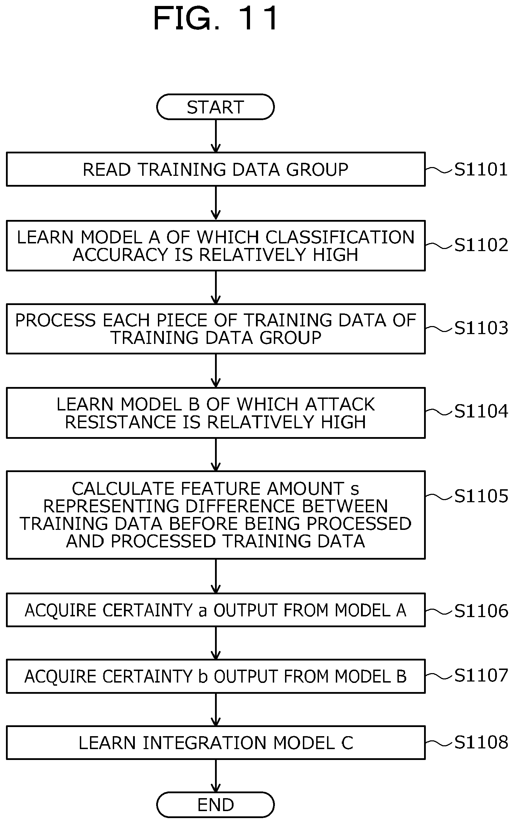

Next, an example of a training processing procedure executed by the information processing device 100 will be described with reference to FIG. 11. The training processing is, for example, implemented by the CPU 301, the storage area including the memory 302, the recording medium 305, or the like, and the network I/F 303 illustrated in FIG. 3.

FIG. 11 is a flowchart illustrating an example of the training processing procedure. In FIG. 11, the information processing device 100 reads a training data group (step S1101).

Next, the information processing device 100 learns a model A of which classification accuracy is relatively high using each piece of training data of the training data group as an input (step S1102).

Furthermore, the information processing device 100 processes each piece of training data of the training data group according to a rule (step S1103). Then, the information processing device 100 learns a model B of which an attack resistance is relatively high using each piece of the processed training data as an input (step S1104).

Next, the information processing device 100 calculates a feature amount s representing a difference between the training data before being processed and the processed training data (step S1105).

Then, in a case where each piece of the training data of the training data group is used as an input, the information processing device 100 acquires a certainty a output from the learned model A (step S1106). Furthermore, in a case where each piece of the processed training data is used as an input, the information processing device 100 acquires a certainty b output from the learned model B (step S1107).

Next, the information processing device 100 learns an integration model C using the acquired certainty a, the acquired certainty b, and the calculated feature amount s as inputs (step S1108). Then, the information processing device 100 ends the training processing. As a result, the information processing device 100 can obtain the integration model C that can accurately determine whether or not the query data is normal.

### (Inference Processing Procedure)

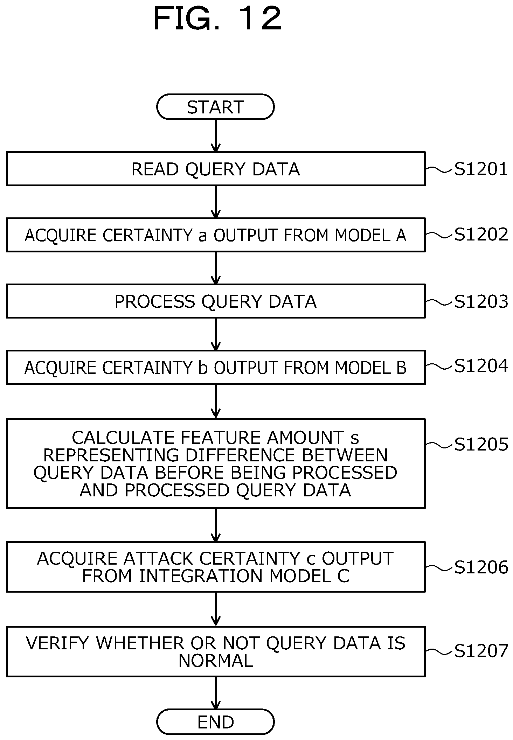

Next, an example of an inference processing procedure executed by the information processing device 100 will be described with reference to FIG. 12. The inference processing is, for example, implemented by the CPU 301, the storage area including the memory 302, the recording medium 305, or the like, and the network I/F 303 illustrated in FIG. 3.

FIG. 12 is a flowchart illustrating an example of the inference processing procedure. In FIG. 12, the information processing device 100 reads query data (step S1201).

Next, in a case where the query data is used as an input, the information processing device 100 acquires a certainty a output from a model A (step S1202).

Furthermore, the information processing device 100 processes the query data according to a rule (step S1203). Then, in a case where the processed query data is used as an input, the information processing device 100 acquires a certainty b output from a model B (step S1204).

Next, the information processing device 100 calculates a feature amount s representing a difference between the query data before being processed and the processed query data (step S1205). Then, in a case where the acquired certainty a, the acquired certainty b, and the calculated feature amount s are used as inputs, the information processing device 100 acquires an attack certainty c output from an integration model C (step S1206).

Next, the information processing device 100 verifies whether or not the query data is normal on the basis of the attack certainty c and outputs the verification result (step S1207). Then, the information processing device 100 ends the inference processing. As a result, the information processing device 100 can accurately determine whether or not the query data is normal.

Here, the information processing device 100 may execute the processing of some steps in each of the flowcharts of FIGs. 11 and 12 in a different order. For example, an order of the processing in step S1102 and the processing in steps S1103 and S1104 can be exchanged. Furthermore, the information processing device 100 may omit processing of some steps in each flowchart in FIGs. 11 and 12. For example, in a case where the information processing device 100 does not learn the models A and B and acquires the models A and B from another computer, the processing in steps S1102 and S1104 can be omitted.

As described above, according to the information processing device 100, the first model to which the training data is input can be acquired. According to the information processing device 100, it is possible to acquire the second model to which the training data that has been processed according to a rule is input. According to the information processing device 100, it is possible to learn the third model that detects abnormal data using the output of the first model when the training data is input, the output of the second model when the processed training data processed according to the rule is input, and the predetermined feature amount as inputs. The predetermined feature amount is a feature amount regarding training data before being processed, a feature amount regarding processed training data, a feature amount regarding a difference between the training data before being processed and the processed training data, a feature amount regarding normal data, a feature amount regarding abnormal data, or the like. As a result, the information processing device 100 can obtain the third model of which the classification accuracy and the attack resistance are relatively high.

According to the information processing device 100, as the feature amount regarding the difference between the training data before being processed and the processed training data, a difference between session lengths of the training data before being processed and the processed training data can be calculated. As a result, the information processing device 100 can be applied to a case where the training data is structured data relating to communication.

According to the information processing device 100, the first model can be acquired by learning the first model using predetermined training data as an input. As a result, it is possible that the information processing device 100 does not acquire the first model from another computer.

According to the information processing device 100, the second model can be acquired by processing the predetermined training data according to the rule and learning the second model using the processed predetermined training data as an input. As a result, it is possible that the information processing device 100 does not acquire the second model from another computer.

According to the information processing device 100, as the predetermined feature amount, the combination of the feature amount regarding the training data before being processed and the feature amount regarding the processed training data and the feature amount regarding the difference between the training data before being processed and the processed training data can be used. As a result, the information processing device 100 can use a feature amount that is relatively closely related to the evasion attack as the predetermined feature amount so that the third model of which the classification accuracy and the attack resistance are relatively high can be obtained.

According to the information processing device 100, it is possible to acquire the query data. According to the information processing device 100, it is possible to process the query data acquired according to the rule. According to the information processing device 100, it is possible to acquire the first output of the first model when the query data before being processed is input. According to the information processing device 100, it is possible to acquire the second output of the second model when the processed query data is input. According to the information processing device 100, the third output of the learned third model when the acquired first output, the acquired second output, and the predetermined feature amount are input can be acquired and output. As a result, the information processing device 100 can make the third output that accurately indicates whether or not the query data is normal be available.

According to the information processing device 100, it is possible to use the first model and the second model that are learned respectively using different algorithms. As a result, the information processing device 100 can allow the output of the first model and the output of the second model, obtained by evaluating validity of query data by the third model from different viewpoints, to be referred. Therefore, the information processing device 100 can improve the classification accuracy and the attack resistance of the third model.

According to the information processing device 100, it is possible to use the rule corresponding to the evasion attack. As a result, the information processing device 100 can improve of the attack resistance of the second model. As a result, the information processing device 100 can improve the attack resistance of the third model that refers to the output of the second model.

Note that the information processing method described in the present embodiment may be implemented by executing a prepared program on a computer such as a personal computer (PC) or a workstation. The information processing program described in the present embodiment is executed by being recorded on a computer-readable recording medium and being read from the recording medium by the computer. The recording medium is a hard disk, a flexible disk, a compact disc (CD)-ROM, a magneto-optical disc (MO), a digital versatile disc (DVD), or the like. Furthermore, the information processing program described in the present embodiment may be distributed via a network such as the Internet.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A non-transitory computer-readable recording medium storing an information processing program for causing a computer to execute processing comprising:
acquiring a first model to which training data is input;
acquiring a second model to which the training data that has been processed according to a certain rule is input; and
learning a third model that detects abnormal data using, as an input, an output of the first model when the training data is input, an output of the second model when the processed training data processed according to the rule is input, and at least any one of feature amounts including a feature amount regarding the training data before being processed, a feature amount regarding the processed training data, a feature amount regarding a difference between the training data before being processed and the processed training data, a feature amount regarding normal data, or a feature amount regarding abnormal data.

2. The non-transitory computer-readable recording medium storing the information processing program according to claim 1, wherein the feature amount regarding the difference between the training data before being processed and the processed training data is a difference between session lengths of the training data before being processed and the processed training data.

3. The non-transitory computer-readable recording medium storing the information processing program according to claim 1 or 2, wherein
the processing to acquire the first model
acquires the first model by learning the first model using predetermined training data as an input.

4. The non-transitory computer-readable recording medium storing the information processing program according to any one of claims 1 to 3, wherein
the processing to acquire the second model
acquires the second model by learning the second model by processing predetermined training data according to the rule and using the processed predetermined training data as an input.

5. The non-transitory computer-readable recording medium storing the information processing program according to any one of claims 1 to 4, wherein
the processing to learn the third model
learns the third model using the output of the first model when the training data is input, the output of the second model when the processed training data processed according to the rule is input, a combination of the feature amount regarding the training data before being processed and the feature amount regarding the processed training data, and the feature amount regarding the difference between the training data before being processed and the processed training data as inputs.

6. The non-transitory computer-readable recording medium storing the information processing program according to any one of claims 1 to 5, for causing the computer to execute processing further comprising:
acquiring query data;
processing the query data acquired according to the rule;
acquiring a first output of the first model when the query data before being processed is input;
acquiring a second output of the second model when the processed query data is input; and
acquiring and outputting a third output of the learned third model when the acquired first output, the acquired second output, and at least any one of feature amounts including a feature amount regarding the query data before being processed, a feature amount regarding the processed query data, a feature amount regarding a difference between the query data before being processed and the processed query data, a feature amount regarding normal data, or a feature amount regarding abnormal data are input.

7. A computer-implemented method comprising:
acquiring a first model to which training data is input;
acquiring a second model to which the training data that has been processed according to a certain rule is input; and
learning a third model that detects abnormal data using, as an input, an output of the first model when the training data is input, an output of the second model when the processed training data processed according to the rule is input, and at least any one of feature amounts including a feature amount regarding the training data before being processed, a feature amount regarding the processed training data, a feature amount regarding a difference between the training data before being processed and the processed training data, a feature amount regarding normal data, or a feature amount regarding abnormal data.

8. An information processing device comprising a processor configured to perform processing, the processing including:
acquiring a first model to which training data is input;
acquiring a second model to which the training data that has been processed according to a certain rule is input; and
learning a third model that detects abnormal data using an output of the first model when the training data is input, an output of the second model when the processed training data processed according to the rule is input, and at least any one of feature amounts including a feature amount regarding the training data before being processed, a feature amount regarding the processed training data, a feature amount regarding a difference between the training data before being processed and the processed training data, a feature amount regarding normal data, and a feature amount regarding abnormal data.
